# EUROPÄISCHE PATENTANMELDUNG

(11) **EP 1 806 430 A1**
(43) Veröffentlichungstag der Anmeldung: **11.07.2007**
(21) Anmeldenummer: 06000338.1
(22) Anmeldetag: 09.01.2006
(51) Int. Cl.: C23C 26/00, C23C 4/00, C04B 38/00, C04B 41/45

(54) **Keramische Schicht mit hoher Porosität, Verwendung dieser Schicht sowie ein Bauteil mit dieser Schicht**

(71) Anmelder: SIEMENS AKTIENGESELLSCHAFT, 80333 München (DE)
(72) Erfinder: Lampenscherf, Stefan, Dr., 85586 Poing (DE); Stamm, Werner, Dr., 45481 Mühlheim an der Ruhr (DE)

(57) **Zusammenfassung**

Keramische Schichten werden oft zur Wärmedämmung in einem Schichtsystem eingesetzt. Dabei weisen sie eine hohe Porosität auf.

Die erfindungsgemäße poröse keramische Wärmedämmschicht weist eine besondere Verteilung in der Porengröße auf, so dass sie auch bei Temperaturen größer 1200°C eine große Dehnungstoleranz aufweist.

## Beschreibung

Die Erfindung betrifft eine keramische Schicht mit hoher Porosität, die Verwendung dieser Schicht bei sehr hohen Temperaturen sowie ein Bauteil mit dieser Schicht.

Keramische Schichten werden oft zur Wärmedämmung von Bauteilen eingesetzt, die ohne Schutzschicht nicht bei hohen Temperaturen einsatzfähig wären. Dies sind z.B. Turbinenschaufeln für Gasturbinen oder Dampfturbinen. Dabei wird eine keramische Wärmedämmschicht auf ein Substrat mit einer metallischen Anbindungsschicht aufgebracht.

Neben den stängelförmigen EB-PVD-Schichten aus Zirkonoxid sind auch plasmagespritzte keramische Schichten bekannt, die eine Porosität aufweisen, um einerseits eine geringe thermische Leitfähigkeit zu erreichen und andererseits eine hohe Thermoschockbeständigkeit zu garantieren. Insbesondere bei Beschichtungen für die Brennkammer wird eine hohe Porosität verwendet. Dabei werden oft Kunststoffteilchen beim Plasmaspritzen zugemischt, die verdampfen und so eine gewünschte Porosität in der Schicht erzeugen.

Die bisher bekannten keramischen porösen Schichten zeigen jedoch insbesondere bei großen Schichtdicken eine zu geringe Dehnungstoleranz.

Es ist daher Aufgabe der Erfindung eine keramische Schicht, eine Verwendung der Schicht und ein Bauteil aufzuzeigen, die oben genannte Probleme überwinden.

Die Aufgabe wird gelöst durch eine keramische Schicht gemäß Anspruch 1 oder 2, durch eine Verwendung gemäß Anspruch 11 und durch ein Bauteil gemäß Anspruch 12.

In den Unteransprüchen sind weitere vorteilhafte Maßnahmen aufgelistet, die in vorteilhafter Art und Weise beliebig miteinander kombiniert werden können.

Die Erfindung wird anhand der folgenden Zeichnungen näher erläutert.

Es zeigen:
- Figur 1: ein Schichtsystem,
- Figur 2: ein Schliffbild einer keramischen Schicht nach dem Stand der Technik,
- Figur 3: ein Schliffbild einer erfindungsgemäßen keramischen Schicht,
- Figur 4: eine Gasturbine,
- Figur 5: eine perspektivische Ansicht einer Turbinenschaufel und
- Figur 6: eine perspektivische Ansicht einer Brennkammer.

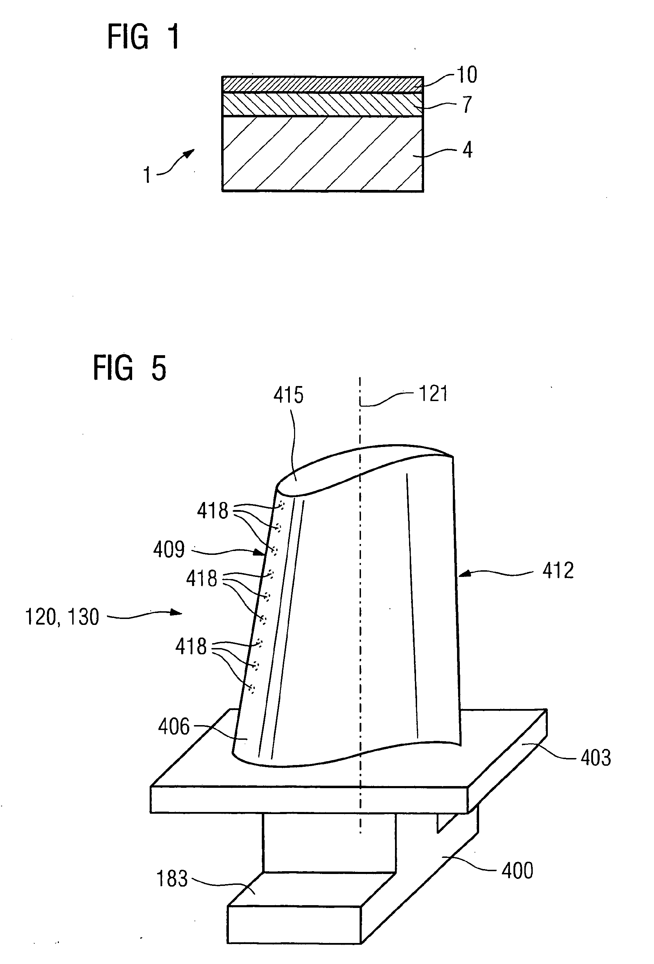

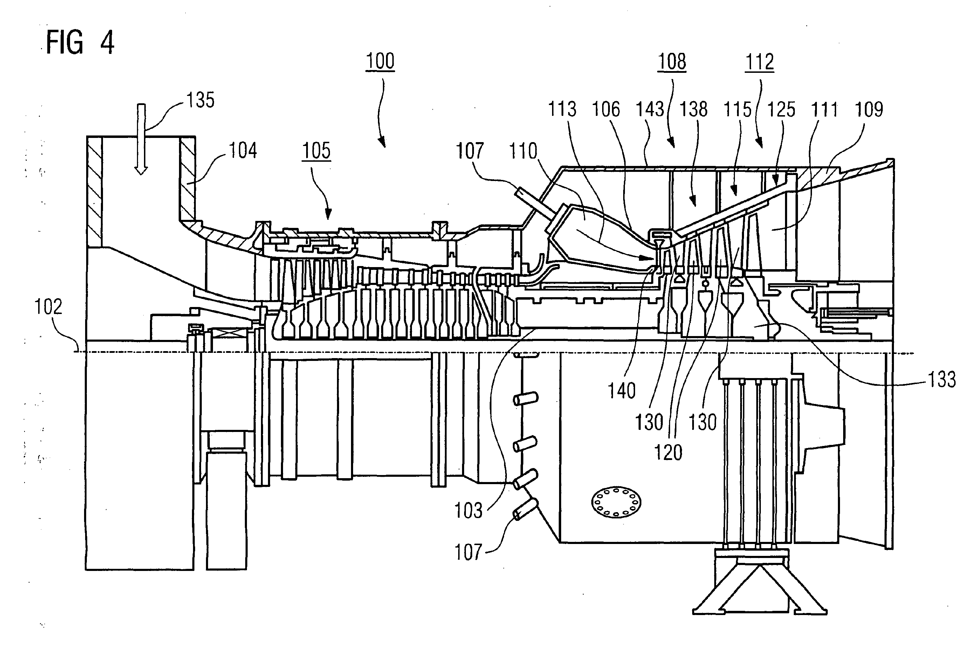

Figur 1 zeigt ein erfindungsgemäßes Schichtsystem 1.
Das Schichtsystem 1 besteht aus einem Substrat 4, das insbesondere bei Anwendung für hohe Temperaturen wie z. B. bei Gasturbinen 100 (Fig. 4) aus nickel- oder kobaltbasierten Superlegierungen besteht. Bei Dampfturbinen können auch eisenbasierte Superlegierungen verwendet werden. Auf dem Substrat 4 ist vorzugsweise eine metallische Anbindungsschicht 7 vorhanden, die eine Legierung des Typs MCrAlX darstellt.

Auf dieser metallischen Anbindungsschicht 7 oder auf dem Substrat 4 ist eine erfindungsgemäße keramische Schicht 10 mit hoher Porosität vorhanden.

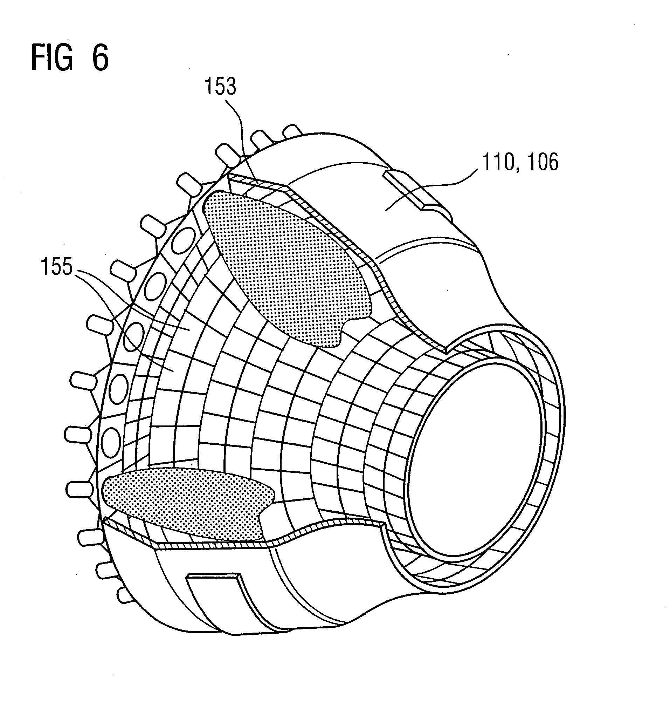

Insbesondere bei sehr hohen Temperaturen wie sie z.B. für Beschichtungen innerhalb der Brennkammer (Fig. 6) auftreten (≥1100°C) ist eine gezielte Einstellung der Porosität notwendig, um eine ausreichende Dehnungstoleranz zu erreichen.

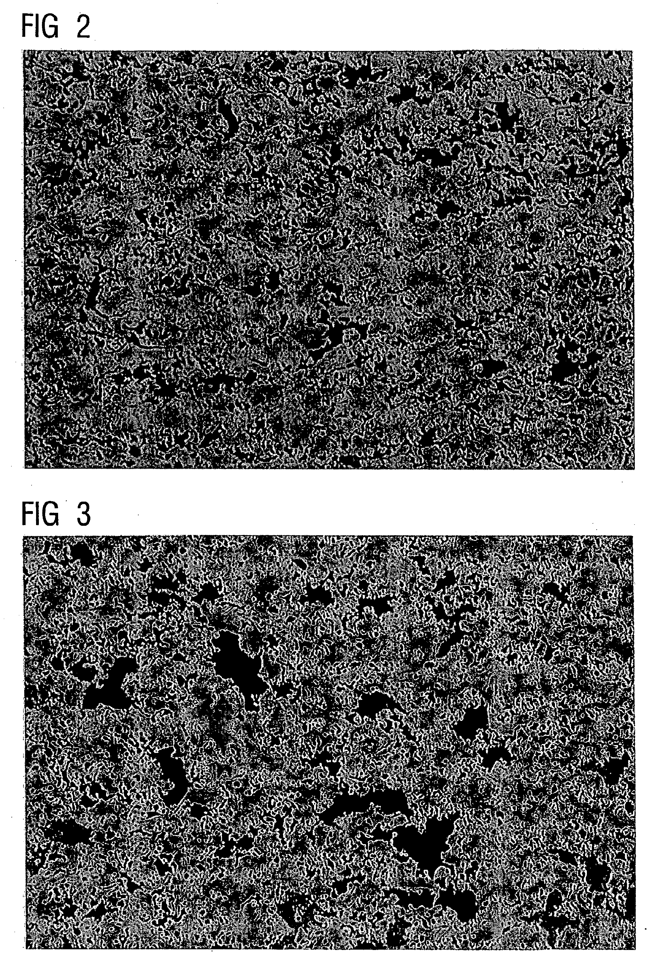

In Figur 2 ist ein Schliffbild einer keramischen Wärmedämmschicht mit Poren und deren Porenquerschnitte nach dem Stand der Technik gezeigt.
Eine Pore in der keramischen Schicht wird bei der Herstellung des Schliffes geschnitten und weist in dieser Schnittebene einen bestimmten Porenquerschnitt auf, der die Fläche der Pore in der Ebene des Schliffbildes darstellt.
Jedes andere Schliffbild ergibt ähnliche Werte für die Porenquerschnitte.
Die Porositätsanalyse ergibt für das Schliffbild nach dem Stand der Technik zwar Poren in dem Bereich von
0µm² - 3000µm² und auch Porenquerschnitte in dem Bereich von >3000µm² - 6000µm², aber keine darüber liegenden Porenquerschnitte.

In Figur 3 ist ein Schliffbild einer erfindungsgemäßen keramischen Wärmedämmschicht 10 mit Poren und deren Porenquerschnitte gezeigt.
Folgende Tabelle offenbart eine Verteilung der Porenquerschnitte.

| Porenquerschnitt [µm²] | Porenanzahl |
|---|---|
| 0 - 3000 | ~2200/mm² |
| 3000 - 6000 | ~ 8,5/mm² |
| 6000 - 9000 | ~ 2,8/mm² |
| 9000 - 12000 | ~ 1,5/mm² |

Die erfindungsgemäße keramische Schicht 10 weist auch Porenquerschnitte mit Werten zwischen >6000µm² - 9000µm² auf (Fig. 3).
Vorzugsweise sind auch Porenquerschnitte von >9000µm² - 12000µm² vorhanden.
Die höhere Porosität wird nicht durch eine gleichmäßige Vergrößerung der Poren nach dem Stand der Technik erreicht, sondern durch bewusste Einbringung von einigen größeren Poren, also eine Verbreiterung der Porenquerschnittsverteilung, die dann auch zu geringen Härtewerten für eine keramische Schicht führt.

Die Porosität liegt bei 22vol% bis 28vol%. Vorzugsweise werden Werte um 24vol% oder 26vol% verwendet. Die Härte der Schicht gemessen mit HV_{0,3} beträgt um 630.

Die Schichtdicke der keramischen Schicht 10 beträgt zwischen 200µm und 2400µm, insbesondere zwischen 1000µm und 1200µm. Vorzugsweise kann die Schichtdicke auch größer 1500µm sein.

Die Dehnungstoleranz dieser erfindungsgemäßen Schicht 10 mit einer Schichtdicke von 1100µm beträgt bei 1300°C knapp 0,15%. Vergleichbare Standardschichten haben Werte <0,1%. Damit liegt eine deutliche Steigerung der Dehnungstoleranz für die erfindungsgemäße Schicht 10 bei hohen Temperaturen vor. Bei niedrigen Temperaturen (um die 1100°C) sind die Dehnungstoleranzwerte der Standardschichten und der neuen Schichten vergleichbar.

Die Schicht 10 wird vorzugsweise durch Plasmaspritzen mit Kunststoffteilchen hergestellt. Aufgrund des hohen zu verwendenden Anteils an Kunststoff bilden sich größere Hohlräume aus (Perkulationseffekt, d.h. die Hohlräume überlappen sich).

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der McrAlx kann noch eine erfindungsgemäße Wärmedämmschicht 10 vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX ist noch eine erfindungsgemäße Wärmedämmschicht 10 vorhanden sein, die vorzugsweise die äußerste Schicht ist, und besteht beispielsweise aus Zr0₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Keramische Schicht (10) mit Poren,
die einen Porenquerschnitt aufweisen,
wobei die Porenquerschnitte Werte von >6000 µm² bis 9000 µm² aufweisen.

2. Keramische Schicht (10),
die eine Porosität von 22vol% bis 28vol% und eine Härte zwischen 600HV₀.₃ und 660HV₀.₃, insbesondere 630HV_{0,3},
aufweist.

3. Keramische Schicht nach Anspruch 1 oder 2,
die Porenquerschnitte von >9000µm² bis 12000µm² aufweisen.

4. Keramische Schicht nach Anspruch 1, 2 oder 3,
deren Porenquerschnitte in die Bereiche
Oµm² bis 3000*µ*m²,
> 3000µm² bis 6000µm²,
> 6000µm² bis 9000µm² und
> 9000µm² bis 12000µm² aufgeteilt werden können,
wobei folgende Porenverteilung der Porenquerschnitte gegeben ist:
in dem Bereich 0 µm² bis 3000µm² : 2000 bis 2400 Poren pro mm² ,
insbesondere -2200 Poren pro mm²,
in dem Bereich >3000µm² bis 6000µm² : 6 bis 10 Poren pro mm² ,
insbesondere ~8,5 Poren pro mm²,
in dem Bereich >6000µm² bis 9000µm² : 2,2 bis 3,2 Poren pro mm² ,
insbesondere ~2,8 Poren pro mm² und
in dem Bereich >9000µm² bis 12000µm² : 1,0 bis 2,2 Poren pro mm²,
insbesondere ~1,5 Poren pro mm².

5. Keramische Schicht nach Anspruch 1, 2, 3 oder 4,
deren Porosität bei 24vol% liegt.

6. Keramische Schicht nach Anspruch 1, 2, 3 oder 4,
deren Porosität bei 26vol% liegt.

7. Keramische Schicht nach Anspruch 1, 2, 3, 4, 5 oder 6,
deren Schichtdicke zwischen 200µm und 2400µm, insbesondere zwischen 800µm und 2000µm, beträgt.

8. Keramische Schicht nach Anspruch 1, 2, 3, 4, 5 oder 6,
deren Schichtdicke zwischen 1000µm und 1200µm beträgt.

9. Keramische Schicht nach Anspruch 1, 2, 3, 4, 5 oder 6,
deren Schichtdicke zwischen 200µm und 1000µm beträgt.

10. Keramische Schicht nach Anspruch 1, 2, 3, 4, 5 oder 6,
deren Schichtdicke größer 1500µm beträgt.

11. Verwendung einer keramischen Schicht (10) nach einem oder mehreren der Ansprüche 1 bis 10 für den Einsatz bei hohen Temperaturen ≥ 1100°C,
insbesondere ≥ 1200°C.

12. Bauteil (-1, 120, 130, 138, 155)
aufweisend eine keramische Schicht (10) nach einem oder mehreren der vorherigen Ansprüche 1 bis 10.

13. Bauteil nach Anspruch 12,
das ein Bauteil einer Dampfturbine oder Gasturbine (100) ist,
insbesondere ein Brennkammerelement (155),
oder Turbinenschaufel (120, 130) oder ein Gehäuseteil (138)

14. Bauteil nach Anspruch 12 oder 13,
dessen Substrat (4) nickelbasiert ist.

15. Bauteil nach Anspruch 12 oder 13,
dessen Substrat (4) kobaltbasiert ist.
